# EUROPEAN PATENT APPLICATION

(11) **EP 3 906 993 A1**
(43) Date of publication of application: **10.11.2021**
(21) Application number: 20172997.7
(22) Date of filing: 05.05.2020
(51) Int. Cl.: B01D 53/18, B01D 53/50

(54) **WET INLINE SCRUBBER WITH A SIDE INLET FOR REDUCING THE AMOUNT OF SOX IN AN EXHAUST GAS PRODUCED BY ONE OR MORE ENGINES OF A MARINE VESSEL**

(71) Applicant: Yara Marine Technologies AS, 0277 Oslo (NO)
(72) Inventor: BAHADUR THAPA, Shyam, 0655 Oslo (NO); JOURAK, Amir, 2074 Eidsvoll Verk (NO); POHJANEN, Pekka Juhana, 0268 Oslo (NO)
(74) Representative: De Clercq & Partners

(57) **Abstract**

The present disclosure relates to a wet inline scrubber with a side inlet using alkali scrubber fluid for reducing the amount of SOx in the exhaust gas of one or more engines of a marine vessel, comprising a vertically extending exhaust gas reaction tube, a lower scrubbing chamber as well as an upper scrubbing chamber comprising a plurality of alkali scrubber fluid injectors to partially scrub this exhaust gas, a used scrubber fluid drain at the bottom thereof. The lower chamber comprises an exhaust gas outlet confining the lower scrubbing chamber at the top thereof, which comprises a central opening arranged to let the partially scrubbed exhaust gas to pass through it, a body extending from the central opening up to an outer wall thereof which is in contact with the inner wall of the exhaust gas reaction tube, wherein between the body of the lower chamber exhaust gas outlet and the inner wall of the exhaust gas reaction tube, one or more slit-shaped openings are provided that allow scrubber scrubber fluid to flow from the upper scrubbing chamber to the lower scrubbing chamber. The present disclosure further relates to a method for reducing the amount of SOx in the exhaust gas of one or more such engines.

## Description

### TECHNICAL FIELD

The present disclosure relates to the field of cleaning of exhaust gas produced by one or more engines of a marine vessel. More in particular, the disclosure relates to reducing the content of sulphur oxides (SOₓ) in the exhaust gas produced by one or more engines of a marine vessel using a wet inline scrubber with a side inlet.

### BACKGROUND

It is already known to apply wet inline marine scrubbers using an alkali scrubber liquid (solution) such as seawater which is whether or not supplemented with alkali, or fresh water to which alkali is added, to reduce the amount of SOx in the exhaust gas of marine vessels in order to meet the maritime emission (MARPOL) regulations of the International Marine Organization (IMO).

Wet inline scrubbers with an I-shaped design have a vertically extending exhaust gas reaction tube having an inlet for marine exhaust gas at the bottom thereof. In inline scrubbers, the exhaust gas pipe is connected directly to the scrubber. These type of scrubbers have the disadvantage that they are considerably long and a sufficient long chimney is necessary to install this type of scrubbers. Especially older ships with a chimney having a restricted length are more difficult to retrofit with such scrubbers.

In order to reduce the height of the marine scrubber, wet marine inline scrubbers with a side inlet (entry) for the marine exhaust gas have been developed. The present disclosure relates to this type of marine scrubbers.

Some ships however require a further reduction of the height of the scrubber.

It is consequently an aim of the present disclosure to provide a wet inline marine scrubber with a side inlet for reducing the amount of SOx in a marine exhaust gas having a reduced height.

### Summary

According to a first aspect of the present disclosure, a wet inline scrubber using alkali scrubber fluid for reducing the amount of SOx in an exhaust gas produced by one or more engines of a marine vessel, comprising a vertically extending exhaust gas reaction tube, which comprises
- a lower scrubbing chamber comprising
   ∘ a side inlet for the exhaust gas produced by the one or more engines of the marine vessel,
   ∘ a plurality of scrubber fluid injectors to inject alkali scrubber fluid in the exhaust gas present in the lower scrubbing chamber to partially scrub this exhaust gas,
   ∘ a used scrubber fluid drain at the bottom thereof,
- an upper scrubbing chamber comprising
   ∘ an exhaust gas outlet at the top thereof,
   ∘ a plurality of scrubber fluid injectors to inject alkali scrubber fluid in the exhaust gas to further scrub exhaust gas which has already partially been scrubbed in the lower scrubbing chamber,
   wherein the lower scrubbing chamber and the upper scrubbing chamber are fluidically connected through a lower chamber exhaust gas outlet guiding the partially scrubbed exhaust gas flowing from the lower scrubbing chamber to the upper scrubbing chamber, said lower chamber exhaust gas outlet comprising a reverse funnel extending from walls of the exhaust gas reaction tube upwards and towards a central opening, characterized in that along the circumferential border where the reverse funnel is attached to the exhaust gas reaction tube, one or more slit-shaped openings are provided that allow scrubber fluid to flow from the upper scrubbing chamber to the lower scrubbing chamber.

Providing one or more slit-shaped openings along the circumferential border where the reverse funnel is attached to the exhaust gas reaction tube first of all has the advantage that the height (length) of the known wet inline scrubbers can be reduced by approximately 22 - 28%. The reason thereof is that first of all, the side inlet is already used to cool the incoming exhaust gas from the one or more engines, and secondly, the lower scrubber chamber is already used for scrubbing, whereas in a normal I-type scrubber, a certain height is already required to collect the scrubber fluid and to distribute the exhaust gas within the scrubber.

Furthermore, since the used alkali scrubber fluid in the upper scrubbing chamber still has unused alkalinity left since 65 - 75% of the scrubbing is performed in the lower scrubbing chamber, and this water flows down from the upper scrubbing chamber to the lower scrubbing chamber, consumption of alkali scrubber fluid is reduced.

Also, the number of internals is reduced reducing cost and manufacturing time, i.e. the alkali scrubber fluid that flows from the upper scrubbing chamber to the lower scrubbing chamber takes over the function of a guide vane which is normally provided to change the direction of the exhaust gas within the exhaust gas reaction tube and/or to arrange for the distribution of the exhaust gas within the exhaust gas reaction tube. This guide vane is consequently not necessary.

Also, no additional means are necessary in the lower scrubbing chamber to redirect the exhaust gases towards the walls of the exhaust gas reaction tube to create a turbulent gas flow to result in an intimate mixing of the exhaust gas with the scrubber liquid which is injected into the lower scrubbing chamber which reduces the temperature of the exhaust gas and allows an efficient dissolving of SOx in the scrubber liquid. The one or more slit-shaped openings that are arranged in the lower chamber exhaust gas outlet take care of this effect.

Furthermore, since the exhaust gas enters the lower scrubbing chamber via a side inlet, there is no need for the normally present water trap in the scrubber exhaust gas inlet that prevents scrubber water from entering the marine vessel engine.

Furthermore, the exhaust gas is evenly distributed at the side inlet because of an obstruction which is created for the exhaust gas passing through the side inlet caused by the layer of scrubber fluid which flows from the upper scrubbing chamber to the lower scrubbing chamber over the side inlet. This also leads to a reduced velocity of the incoming exhaust gas. Also, since the exhaust gas passes through the water layer that flows down over the side inlet, the temperature of the exhaust gas is cooled down leading to a better scrubbing of the exhaust gas.

According to one embodiment of a system according to the disclosure, the one or more slit-shaped openings cover between 40% and 60% of the circumferential border where the reverse funnel is attached to the exhaust gas reaction tube.

More in particular, the one or more slit-shaped openings cover around 50% of the circumferential border where the reverse funnel is attached to the exhaust gas reaction tube.

In an embodiment of a scrubber according to the present disclosure, the lower chamber exhaust gas outlet comprises two slit-shaped openings.

More in particular, the lower chamber exhaust gas outlet comprises a first slit-shaped opening arranged at the side of the reaction tube where the exhaust gas side inlet is arranged and a second slit-shaped opening arranged at the opposite side thereof.

In an embodiment of a scrubber according to the present disclosure, the scrubber comprises a side tube which is connected to the lower scrubber chamber via the alkali scrubber fluid inlet, wherein this side tube is arranged with one or more alkali scrubber fluid injectors to inject scrubber fluid in the exhaust gas coming from the one or more engines of the marine vessel.

The alkali scrubber fluid injected by the injectors helps to cool down the exhaust gas which reduces the temperature and consequently reduces the velocity thereof. A reduced velocity of the exhaust gas helps in obtaining a better distribution of the exhaust gas that enters into the lower scrubbing chamber.

In an embodiment of a scrubber according to the present disclosure, the upper scrubbing chamber comprises a deflection body which is arranged above the central opening of the lower chamber exhaust gas outlet.

The deflection body helps to optimise the function of the scrubbing fluid as well as to converge / mix the exhaust gas such that the unscrubbed exhaust gas cannot leave the scrubber without being scrubbed to remove the SOx.

In an embodiment, the deflection body comprises two oppositely directed straight cones having a common base and a common axis of rotation coinciding with the length axis of the exhaust gas reaction tube of the scrubber.

In a specific embodiment of a scrubber according to the present disclosure, the one or more scrubber fluid injectors of the upper scrubbing chamber are arranged above the deflection body.

The alkali scrubber fluid that is introduced by the one or more water injectors both wash and cool the incoming exhaust gas.

In an embodiment of a scrubber according to the present disclosure, the lower scrubbing chamber comprises a single scrubber water drain arranged at the bottom thereof. In that way, drain piping is saved simplifying the scrubber system.

In a particular embodiment of a scrubber according to the present disclosure, the exhaust gas reaction tube has a circular diameter, and the lower chamber exhaust gas outlet has an annular (ring) shape.

In an embodiment of a scrubber according to the present disclosure, the height of the scrubber is between 8 m and 18 m, depending upon the size of the one or more engines of the marine vessel.

According to a second aspect of the present disclosure, a method is disclosed for scrubbing of exhaust gas produced by one or more engines of a marine vessel, wherein the exhaust gas is introduced into a wet inline scrubber where the exhaust gas is scrubbed in contact with alkali scrubber fluid for reduction of SOx in the exhaust gas, the method comprising the steps of:
- introducing the exhaust gas from the one or more engines of the marine vessel via a side inlet in a lower scrubbing chamber of a vertically extending exhaust gas reaction tube;
- injecting alkali scrubber fluid in the exhaust gas present in the lower scrubbing chamber, thereby partially scrubbing the exhaust gas;
- withdrawing the partially scrubbed exhaust gas from the lower scrubbing chamber and letting it flow into an upper scrubbing chamber by passing it through a reverse funnel extending from walls of the exhaust gas reaction tube upwards and towards a central opening;
- injecting alkali scrubber fluid in the partially scrubbed exhaust gas present in the upper scrubbing chamber, thereby further scrubbing the partially scrubbed exhaust gas;
- withdrawing the scrubbed exhaust gas from the upper scrubbing chamber via an exhaust gas outlet arranged at the top of the upper scrubbing chamber;
- flowing of used scrubber fluid from the upper scrubbing chamber through one or more slit-shaped openings arranged along the circumferential border where the reverse funnel is attached to the exhaust gas reaction tube;
- flowing of used scrubber fluid over the exhaust gas side inlet present in the lower scrubbing chamber;
- withdrawing the used scrubber fluid from the lower scrubbing chamber via a used scrubber fluid drain at the bottom of the lower scrubbing chamber.

In a possible method according to the present disclosure, the method further comprises the step of injecting alkali scrubber fluid in the exhaust gas from the one or more engines of the marine vessel which is flowing in a side tube which is connected to the lower scrubbing chamber via the side inlet.

In a specific method according to the present disclosure, the method comprises the step of injecting scrubber fluid in the upper scrubbing chamber above a deflection body.

In a particular method according to the present disclosure, the method comprises the step of withdrawing the used scrubber fluid via a single used scrubber fluid drain at the bottom of the lower scrubbing chamber.

### Description of the figures

FIG. 1 shows a length section through a scrubber according to the present disclosure.
FIG. 2 shows a cross section of the scrubber according to line AA as shown in FIG. 1.
FIG. 3 shows a detail of the lower chamber exhaust gas outlet of a scrubber according to the present disclosure.

### Detailed description

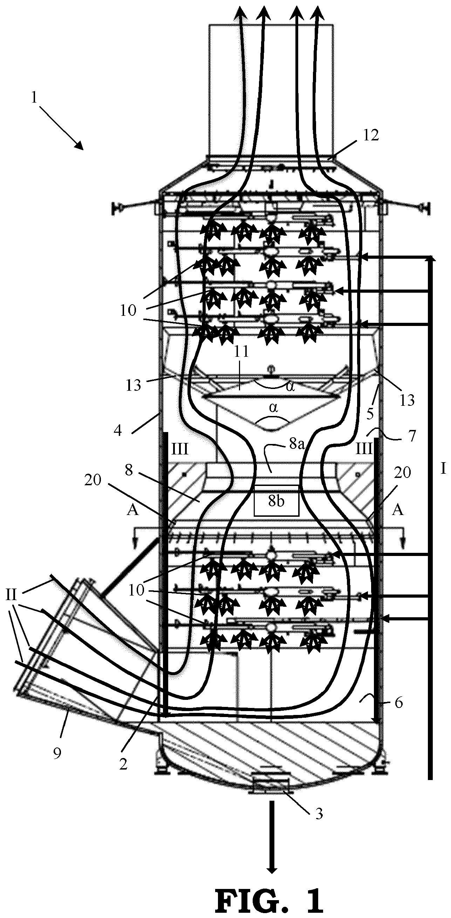

As can be seen in figure 1, a wet inline scrubber (1) with a side inlet (2) for exhaust gas produced by one or more engines of a marine vessel (not shown in figure 1) comprises a vertically extending exhaust gas reaction tube (4) which is provided with an inner wall (5). In figure 1, lines II show an example of how the exhaust gas moves through the inside of the scrubber (1). The exhaust gas reaction tube (4) is more in particular a tubular element having a substantial circular cross section. However, other shapes of cross sections are also possible. The height of the scrubber (1) is more in particular between 8 m and 18 m, depending upon the size of the one or more engines of the marine vessel.

The reaction tube (4) is subdivided in a lower scrubbing chamber (6) and an upper scrubbing chamber (7). The lower and an upper scrubbing chamber (6, 7) are substantially symmetric about a common length axis being substantially vertically arranged.

The lower scrubbing chamber (6) is more in particular connected with a side tube (9) via the side inlet (2). As can be seen in figure 1, the exhaust gas produced by the one or more engines of the marine vessel is entering via this side tube (9) through the side inlet (2) into the lower scrubbing chamber (6). The lower scrubbing chamber (6) is further provided with a plurality of injectors (10) for injecting alkali scrubber fluid into the exhaust gas present in the lower scrubbing chamber. Also the upper scrubbing chamber (7) is provided with a plurality of injectors (10) for injecting alkali scrubber fluid into the exhaust gas present in the upper scrubbing chamber (7). The alkali scrubber fluid can be seawater, whether or not supplemented with alkali, as well as fresh water which is supplemented with alkali. The scrubber fluid is delivered to the injectors (10) via the outside of the exhaust gas reaction tube (4), as indicated with lines I in figure 1. The injectors (10) are more in particular in the form of sprayers which disperse the scrubber fluid into the exhaust gas which is flowing from the bottom to the top of the exhaust gas reaction tube (4) in fine droplets. The exhaust gas (3) entering the lower scrubbing chamber (6) is partially scrubbed in the lower scrubbing chamber (6). 65 - 75% of the scrubbing is performed in the lower scrubbing chamber. The further scrubbing is performed in the upper scrubbing chamber (7). The lower scrubbing chamber (6) is at the bottom thereof arranged with a used scrubber fluid drain (3). More in particular, a single used scrubber fluid drain (3) is provided. The upper scrubbing chamber (7) is arranged with an exhaust gas outlet (12) at the top thereof. This scrubbed gas leaves the upper scrubbing chamber (7) through the exhaust gas outlet (12) from which it is released into the atmosphere directly or via a not shown cleaned exhaust gas outlet pipe. The exhaust gas outlet (12) more in particular is formed as a substantially axial narrowing of the upper scrubbing chamber (7).

The lower scrubbing chamber (6) is at the top thereof provided with a lower chamber exhaust gas outlet (8) which confines the lower scrubbing chamber (6). This lower chamber exhaust gas outlet (8) has a central opening (8a) through which partially scrubbed exhaust gas flows which is coming from the lower scrubbing chamber (6) during operation of the scrubber (1) and which flows up to the upper scrubbing chamber (7). The lower chamber exhaust gas outlet (8) is a coaxial constriction formed substantially as an axial narrowing of the lower scrubbing chamber (6). The lower chamber exhaust gas outlet (8) thus comprises a body (8b) which extends from the central opening (8a) up to the wall of the exhaust gas reaction tube (4). The axial narrowing more in particular is designed substantially as a bottleneck designed to reduce the pressure drop over the narrowing by avoiding sharp edges that may disturb the exhaust gas flow and increase flow resistance therein.

Accordingly, the lower scrubbing chamber (6) and the upper scrubbing chamber (7) are fluidically connected through a lower chamber exhaust gas outlet (8) guiding the partially scrubbed exhaust gas flowing from the lower scrubbing chamber (6) to the upper scrubbing chamber (7). The lower chamber exhaust gas outlet (8) typically comprises a reverse funnel extending from walls of the exhaust gas reaction tube (4) upwards and towards the central opening (8a). A funnel typically refers to a tubular structure, wide at the top and narrow at the bottom, that is used for guiding liquid into a smaller opening. By referring to a reverse funnel, it is meant that the funnel structure is wide at the bottom and narrower at the top, thereby guiding exhaust gas flowing from the wider exit of the lower scrubbing chamber (6) to the more narrow entrance of the upper scrubbing chamber (7).

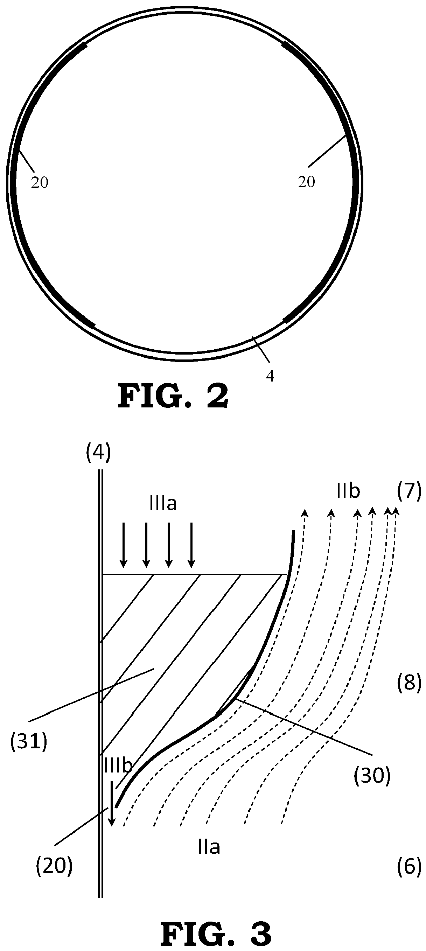

As can be seen in figure 2, between this body (8b) and the inner of the exhaust gas reaction tube (4), one or more slit-shaped openings (20) are provided. These slit-shaped openings (20) consequently interrupt the contact between the wall of the lower chamber exhaust gas outlet (8) and the wall of the exhaust gas reaction tube (4). These slit-shaped openings (20) allow scrubber fluid still having alkalinity in it from the upper scrubbing chamber (7) to flow down along the wall of the exhaust gas reaction tube (4) into the lower scrubbing chamber (6) (see lines III as indicated in figure 1). In this way, the scrubber fluid forms a kind of water film along the wall of the exhaust gas reaction tube (4). This water film also crosses the side inlet (2) of the lower scrubbing chamber (6), having as a consequence that the exhaust gas produced by the one or more engines of the marine vessel need to pass through the water film flowing over this side inlet (2). The one or more slit-shaped openings (20) cover between 40% and 60%, and more in particular around 50%, of the wall of the lower chamber exhaust gas outlet (8).

In fact, the slit-shaped openings (20) are located along the circumferential border where the reverse funnel is attached to the exhaust gas reaction tube. The one or more slit-shaped openings are there to allow scrubber fluid to flow from the upper scrubbing chamber (7) to the lower scrubbing chamber (6).

In the embodiment of a scrubber according to the present disclosure as shown in figure 2, two slit-shaped openings (20) are provided which are arranged opposite each other, i.e. one arranged at the height of the side inlet (2) arranged in the lower scrubbing chamber (6) and one arranged at the opposite side thereof.

As can be seen in figure 1, a deflection body (11) is arranged close to the circular opening of the division plate to redirect the incoming exhaust gas towards the outer walls of the exhaust gas reaction tube. The distance between the deflection body (11) and the circular opening (8a) of the lower chamber exhaust gas outlet (8) has to be sufficient to avoid a constriction of the exhaust gas flow that enters the upper scrubbing chamber (7).

This deflection body (11) comprises in its simplest form two right circular cones pointing in opposite direction and having a common circular base. These two right circular cones have a length axis which virtually connects the vertexes of the respective right circular cones and which coincides with the length axis of the exhaust gas reaction tube (4). The angle α typically is between 80° and 100° and needs to be an optimal compromise between reducing the pressure drop caused by the respective cone and the efficient and uniform spreading of the flow of the exhaust gas in the upper scrubbing chamber (7).

As is shown in figure 1, the deflection body (11) is fastened to the inner wall (4) of the exhaust gas reaction tube (4) by means of connectors (13) that are arranged to cause a minimal disturbance of the exhaust gas flow in the upper scrubbing chamber (7).

In a method according to the present disclosure, exhaust gas produced by one or more engines of a marine vessel is scrubbed in a wet inline scrubber (1) as described above. The method comprising the steps of:
- introducing the exhaust gas from the one or more engines of the marine vessel via the side inlet (2) in the lower scrubbing chamber (6);
- injecting alkali scrubber fluid in the exhaust gas present in the lower scrubbing chamber (6) thereby partially scrubbing the exhaust gas;
- withdrawing the partially scrubbed exhaust gas from the lower scrubbing chamber (6) and letting it flow into the upper scrubbing chamber (7) by passing it through a reverse funnel extending from walls of the exhaust gas reaction tube (4) upwards and towards a central opening (8a)
- injecting alkali scrubber fluid in the partially scrubbed exhaust gas present in the upper scrubbing chamber (7) thereby further scrubbing the partially scrubbed exhaust gas;
- withdrawing the scrubbed exhaust gas from the upper scrubbing chamber (7) via the exhaust gas outlet (12) arranged at the top of the upper scrubbing chamber (7);
- flowing of used scrubber fluid from the upper scrubbing chamber (7) through one or more slit-shaped openings (20);
- flowing of used scrubber fluid over the exhaust gas side inlet (2) present in the lower scrubbing chamber (6);
- withdrawing the used scrubber fluid from the lower scrubbing chamber (6) via the used scrubber fluid drain (3) at the bottom of the lower scrubbing chamber (6).

The method further comprises the step of injecting alkali scrubber fluid in the exhaust gas produced by the one or more engines of the marine vessel which is flowing in the side tube (9).

The method further comprises the step of injecting alkali scrubber fluid in the upper scrubbing chamber (7) above the deflection body (11).

The method also comprises the step of withdrawing the used scrubber fluid via the single used scrubber fluid drain (3) at the bottom of the lower scrubbing chamber (6).

Figure 3, which is a detail of the wet line scrubber as described herein, shows part of the lower chamber exhaust gas outlet (8) guiding the partially scrubbed exhaust gas flowing from the lower scrubbing chamber (6) to the upper scrubbing chamber (7) along lines II (from IIa to IIb). The lower chamber exhaust gas outlet (8) comprises a reverse funnel (30) extending from walls of the exhaust gas reaction tube (4) upwards and towards a central opening (8a). Lines III show how used scrubber fluid from the upper scrubbing chamber (7) flows (from IIIa to IIIb) through the one or more slit-shaped openings (20) into the lower scrubbing chamber (6). The structure of the reverse funnel (30) in the lower chamber exhaust gas outlet (8) also creates a scrubber fluid reservoir (31) allowing controlled dosage of the scrubber fluid through the slit-shaped openings (20).

## Claims

1. A wet inline scrubber using alkali scrubber fluid for reducing the amount of SOx in an exhaust gas produced by one or more engines of a marine vessel, comprising a vertically extending exhaust gas reaction tube, which comprises
- a lower scrubbing chamber comprising
∘ a side inlet for the exhaust gas produced by the one or more engines of the marine vessel, ∘
a plurality of scrubber fluid injectors to inject alkali scrubber fluid in the exhaust gas present in the lower scrubbing chamber to partially scrub this exhaust gas,
∘ a used scrubber fluid drain at the bottom thereof,
- an upper scrubbing chamber comprising
∘ an exhaust gas outlet at the top thereof,
∘ a plurality of scrubber fluid injectors to inject alkali scrubber fluid in the exhaust gas to further scrub exhaust gas which has already partially been scrubbed in the lower scrubbing chamber,
wherein the lower scrubbing chamber and the upper scrubbing chamber are fluidically connected through a lower chamber exhaust gas outlet guiding the partially scrubbed exhaust gas flowing from the lower scrubbing chamber to the upper scrubbing chamber, said lower chamber exhaust gas outlet comprising a reverse funnel extending from walls of the exhaust gas reaction tube upwards and towards a central opening, **characterized in that** along the circumferential border where the reverse funnel is attached to the exhaust gas reaction tube, one or more slit-shaped openings are provided that allow scrubber fluid to flow from the upper scrubbing chamber to the lower scrubbing chamber.

2. A scrubber according to claim 1, wherein the one or more slit-shaped openings cover between 40% and 60% of the circumferential border where the reverse funnel is attached to the exhaust gas reaction tube.

3. A scrubber according to claim 2, wherein the one or more slit-shaped openings cover around 50% of the circumferential border where the reverse funnel is attached to the exhaust gas reaction tube.

4. A scrubber according to any one of claims 1 to 3, wherein the lower chamber exhaust gas outlet comprises two slit-shaped openings.

5. A scrubber according to claim 4, wherein the lower chamber exhaust gas outlet comprises a first slit-shaped opening arranged at the side of the exhaust gas reaction tube where the exhaust gas side inlet is arranged and a second slit-shaped opening is arranged at the opposite side thereof.

6. A scrubber according to any one of claims 1 to 5, wherein the scrubber comprises a side tube which is connected to the lower scrubber chamber via the alkali scrubber fluid inlet, wherein this side tube is arranged with one or more alkali scrubber fluid injectors to inject scrubber fluid in the exhaust gas coming from the one or more engines of the marine vessel.

7. A scrubber according to any one of claims 1 to 6, wherein the upper scrubbing chamber comprises a deflection body which is arranged above the central opening of the lower chamber exhaust gas outlet.

8. A scrubber according to claim 7, wherein the one or more scrubber fluid injectors of the upper scrubbing chamber are arranged above the deflection body.

9. A scrubber according to any one of claims 1 to 8, wherein the lower scrubbing chamber comprises a single used scrubber fluid drain arranged at the bottom thereof.

10. A scrubber according to any one of the preceding claims, wherein the height of the scrubber is between 8 m and 18 m, depending upon the size of the one or more engines of the marine vessel.

11. A method for scrubbing of exhaust gas produced by one or more engines of a marine vessel, wherein the exhaust gas is introduced into a wet inline scrubber where the exhaust gas is scrubbed in contact with alkali scrubber fluid for reduction of SOx in the exhaust gas, the method comprising the steps of:
- introducing the exhaust gas from the one or more engines of the marine vessel via a side inlet in a lower scrubbing chamber of a vertically extending exhaust gas reaction tube;
- injecting alkali scrubber fluid in the exhaust gas present in the lower scrubbing chamber, thereby partially scrubbing the exhaust gas;
- withdrawing the partially scrubbed exhaust gas from the lower scrubbing chamber and letting it flow into an upper scrubbing chamber by passing it through a reverse funnel extending from walls of the exhaust gas reaction tube upwards and towards a central opening;
- injecting alkali scrubber fluid in the partially scrubbed exhaust gas present in the upper scrubbing chamber, thereby further scrubbing the partially scrubbed exhaust gas;
- withdrawing the scrubbed exhaust gas from the upper scrubbing chamber via an exhaust gas outlet arranged at the top of the upper scrubbing chamber;
- flowing of used scrubber fluid from the upper scrubbing chamber through one or more slit-shaped openings arranged along the circumferential border where the reverse funnel is attached to the exhaust gas reaction tube;
- flowing of used scrubber fluid over the exhaust gas side inlet present in the lower scrubbing chamber;
- withdrawing the used scrubber fluid from the lower scrubbing chamber via a used scrubber fluid drain at the bottom of the lower scrubbing chamber.

12. A method according to claim 11, wherein the method further comprises the step of injecting alkali scrubber fluid in the exhaust gas from the one or more engines of the marine vessel which is flowing in a side tube which is connected to the lower scrubbing chamber via the side inlet.

13. A method according to claim 11 and 12, wherein the method comprises the step of injecting alkali scrubber fluid in the upper scrubbing chamber above a deflection body.

14. A method according to any one of claims 11 to 13, wherein the method comprises the step of withdrawing the used scrubber fluid via a single used scrubber fluid drain at the bottom of the lower scrubbing chamber.

15. A method according to any one of claims 11 to 14, wherein a wet inline scrubber according to any one of claims 1 to 10 is used.
